# EUROPÄISCHE PATENTSCHRIFT

(11) **EP 1 016 354 B1**
(45) Veröffentlichungstag und Bekanntmachung des Hinweises auf die Patenterteilung: **27.03.2002**
(21) Anmeldenummer: 99124108.4
(22) Anmeldetag: 02.12.1999
(51) Int. Cl.: A43B 7/28, A42B 3/00, B29B 13/06

(54) **Verfahren zur Herstellung von Formkörpern aus Polymer-Schaumpartikeln**
Process to produce molded parts from polymeric foam particles
Procédé pour produire des objets moulés à partir de particules de mousse en polymère

(30) Priorität: 29.12.1998 DE 19860611
(43) Veröffentlichungstag der Anmeldung: 05.07.2000
(73) Patentinhaber: Fraunhofer-Gesellschaft zur Förderung der angewandten Forschung e.V., 80636 München (DE)
(72) Erfinder: Ziegler, Maik, 71287 Weissach (DE); Geissler, Adam, Dr., 76689 Karlsdorf-Neuthard (DE); Kauffmann, Axel, 71263 Weil der Stadt (DE); Ziegler, Lars, 71229 Leonberg (DE); Hofmann, Knut, 75015 Bretten (DE); Elsner, Peter, Dr., 76327 Pfinztal (DE)

(56) Entgegenhaltungen:
- EP-A- 0 672 708
- WO-A-96/02375
- DE-A- 3 437 786

## Beschreibung

Die Erfindung betrifft ein Verfahren zur Herstellung von dauerhaften Formkörpern aus Polymer-Schaumpartikeln, indem die Schaumpartikel in Form gebracht und durch Mikrowellenenergie miteinander verschweißt werden.

Bei herkömmlichen Verfahren werden die Schaumpartikel in einer geschlossenen Form mit überhitztem Dampf behandelt und zumindest oberflächig zum Schmelzen gebracht, um auf diese Weise eine Schweißverbindung zwischen den Partikeln herzustellen. Durch den Formdruck selbst werden die Partikel zu dem gewünschten Formkörper geformt. Beim Abkühlen des Formkörpers kondensiert der Dampf in den Hohlräumen, so daß sich an den Formvorgang noch ein Trocknen anschließen muß, wobei es in der Regel nicht gelingt, die gesamte Feuchtigkeit auszutreiben.

Bei einem anderen bekannten Verfahren (WO 90/08642 A1) werden geschäumte oder vorgeschäumte Polymerpartikel mit einem mikrowellenabsorbierenden Medium versetzt und in eine Form eingebracht. Nach Schließen der Form werden die Schaumpartikel mittels Mikrowellenenergie verschmolzen und gegebenenfalls unter Freisetzung eines Treibmittels zusätzlich expandiert. Das Verschmelzen der Partikel wird dabei durch das im allgemeinen flüssige mikrowellenabsorbierende Medium erreicht, das unter hochfrequenter elektromagnetischer Strahlung, deren Frequenz im Bereich der Resonanzfrequenz der Moleküle des Mediums liegt, verdampft. Der Dampf verteilt sich gleichmäßig in der Form und in den Partikelzwischenräumen, wobei die Siedetemperatur des Mediums durch den Druck in der Form erhöht werden kann. Durch Wärmeübertragung auf die Partikeloberfläche verschmelzen die Partikel. Gegebenenfalls können diese unter Freisetzung eines Treibmittels zusätzlich expandieren. Die Formen müssen zu diesem Zweck druckdicht verschlossen sein. Eine Verfahrensvariante sieht das Kaschieren eines auf diese Weise erzeugten Formkörpers mittels eines in die Form eingebrachten folienartigen Liners vor.

Bei den genannten Verfahren ist insbesondere nachteilig, daß die Herstellung der Formen mit einem hohen Kostenaufwand verbunden ist. Die Form muß aufgrund des gasförmigen Wärmeträgers druckdicht ausgebildet sein. Im Fall einer Mikrowellenbestrahlung muß die Form aus einem im wesentlichen mikrowellendurchlässigen Material bestehen. Aus wirtschaftlichen Gründen eignen sich die bekannten Verfahren daher nur zur Serienherstellung von Formkörpern. Kleinserien oder individuelle Einzelanfertigungen, z. B. für Modelle, Prototypen, od. dgl., sind nur mit erheblichem Kostenaufwand herstellbar.

Der DE 42 36 717 C1 ist ein Verfahren zur Herstellung eines Formkörpers aus einem biologisch abbaubaren Material, wie Stärke, bestehenden Granulatperlen entnehmbar, wobei die Granulatperlen in eine Form eingebracht und unter Zufuhr von trockenem Dampf oder Heißluft derart behandelt werden, daß zumindest ein Teil der Oberfläche der Granulatperlen angelöst und die Perlen dadurch unter Bildung des dauerhaften Formkörpers verklebt werden. Mit einem solchen Verfahren hergestellte Formkörper sollen insbesondere als Polsterkörper in Umverpackungen für stoßempfindliche Artikel verwendet werden.

Die DE 196 48 525 A1 beschreibt die Herstellung von Innenverkleidungsteilen für Kraftfahrzeuge, wie Sonnenblenden, Hutablagen, Seitenteile, Dachhimmel oder dergleichen, wobei ein vorbereiteter Hohlkörper, z.B. die Außenhaut einer Sonnenblende, mit geschrumpften Schaumpartikeln gefüllt wird und diese unter Verwendung eines mikrowellenabsorbierenden Mediums aufgebläht und miteinander verschweißt werden. Um die Hohlkörperwände gegen den Expansionsdruck der Schaumpartikel abzustützen, wird der Hohlkörper zum Verschweißen der Schaumpartikel in eine ihn allseitig umschließende konturengleiche Form eingebracht.

Der EP 0 316 850 A1 ist ein Verfahren zur Herstellung von Polsterkörpern für Verpackungszwecke entnehmbar, in dem ein folienartiger Beutel mit expandierbaren Polymerpartikeln gefüllt und der Beutel mit den Partikeln in eine mit dem zu polsternden Verpackungsgut gefüllte Verpackung an den zu polsternden Stellen eingelegt wird. Anschließend werden die Partikel aufgeschäumt, so daß der gebildete Polsterkörper die Zwischenräume zwischen der Verpackung und dem Verpackungsgut formgebend ausfüllt und dieses vor mechanischer Beanspruchung geschützt ist.

Im Bereich der Medizintechnik sind polsternde Körperauflagen bekannt, die aus einer gasdichten, flexiblen Hülle mit in dieser lose angeordneten Polymer-Schaumpartikeln bestehen. Beim Sanitätstransport, insbesondere von Patienten mit Verdacht auf Wirbelsäulenverletzungen, wird der Patient auf eine solche Körperauflage gelegt, wobei sich die Schaumpartikel der individuellen Körperkontur des Verletzten anpassen. Anschließend wird die Hülle evakuiert und dadurch die Körperauflage körpergerecht stabilisiert. Wird die flexible Hülle wieder mit Umgebungsdruck beaufschlagt, kann die Köperauflage erneut für den Transport eines Patienten verwendet werden.

Die WO 96/02375 A1 beschreibt ein Verfahren und eine Vorrichtung zur Herstellung von Fußbetteinlagen, indem der Fuß des Benutzers in einer gasdichten flexiblen Tasche angeordnet und die Tasche evakuiert wird, um das Gewebe im Bereich des Fußgewölbes zu komprimieren und die Kontur der Einlage stärker auszuprägen. Anschließend wird ein zur Herstellung der Schuheinlage dienender Abdruck des derart komprimierten Fußes erstellt, indem der Benutzer den Fuß in ein Kissen aus einem geeigneten Abformmaterial setzt. Das Kissen besteht insbesondere aus einem gasdichten flexiblen Beutel, der mit Partikeln aus vorzugsweise Polystyrol befüllt ist. Um den im Kissen ausgeformten Abdruck zu stabilisieren, wird der flexible Beutel evakuiert. Der evakuierte Beutel dient als Negativform zur Herstellung der Fußbetteinlage. Er kann nach Herstellung der Fußbetteinlage expandiert und wiederverwendet werden.

Der Erfindung liegt die Aufgabe zu Grunde, ein Verfahren zur kostengünstigen Herstellung von Formkörpern aus Partikelschaum vorzuschlagen.

Erfindungsgemäß wird diese Aufgabe mit einem Verfahren der eingangs genannten Art dadurch gelöst, welches durch folgende Schritte gekennzeichnet ist:
- Unterbringen der Schaumpartikel in einem gasdichten, folienartigen Beutel;
- Formen des Beutels mit den Schaumpartikeln durch Auflegen auf bzw. Einlegen in eine Formkontur und Evakuieren des Beutels auf die Formkontur zu einer dichten Partikelpackung unter Bildung des Formkörpers;
- Bestrahlen der dicht gepackten Schaumpartikel mit Mikrowellenenergie unter Aufrechterhalten des Unterdrucks in dem Beutel, so daß die Schaumpartikel zumindest oberflächig miteinander verschmelzen.

Die Schaumpartikel werden erfindungsgemäß lose in einen gasdichten, folienartigen Beutel abgefüllt und dieser durch Auf- bzw. Einlegen auf bzw. in eine Formkontur geformt, welche ausschließlich die Aufgabe hat, die Kontur des gewünschten Formkörpers zu bestimmen. Die Formkontur kann folglich aus beliebigen preiswerten Materialien gebildet sein. Die Formgebung und Stabilisierung wird erfindungsgemäß durch Evakuieren des folienartigen Beutels erreicht, wobei sich auch die in dem Beutel lose angeordneten Schaumpartikel verformen, und zwar einerseits durch den von außen wirkenden Überdruck, andererseits durch Absaugen der Luft zumindest aus den offenporigen Hohlräumen der Schaumpartikel. Die im Ursprungszustand im wesentlichen kugelförmigen Partikel verformen sich in die ursprünglich gas- bzw. luftgefüllten Hohlräume zwischen den Partikeln und verkeilen sich dadurch mechanisch. Der Beutel, der sich der vorgegebenen Kontur anlegt, umschließt die oberflächennahen Schaumpartikel eng. Die Kontur des solchermaßen erzeugten Formkörpers bleibt so lange erhalten, wie der Unterdruck in dem Beutel aufrechterhalten wird. In diesem Zustand werden die Schaumpartikel mit Mikrowellenergie zumindest oberflächig verschmolzen; indem der evakuierte Beutel mit den Schaumpartikeln in einem Mikrowellenfeld angeordnet wird, um die Schaumpartikel in an sich bekannter Weise miteinander zu verschweißen, so daß ein formbeständiger und dauerhafter Formkörper erhalten wird.

Die Formgebung erfolgt vorzugsweise derart, daß der Beutel mit den Schaumpartikeln in eine zwei- oder auch mehrteilige Form eingelegt und unter Evakuieren der Beutel unter gleichzeitiger Verengung des Formraums geformt wird, wobei die Form insbesondere aus preiswerten Materialien bestehen kann, da an sie erfindungsgemäß keine besonderen Anforderungen hinsichtlich Druckfestigkeit, Temperaturbeständigkeit od. dgl. zu stellen sind.

Der Beutel mit den Schaumpartikeln kann auch lediglich manuell geformt oder während des Evakuierens auf oder in einer Formkontur manuell nachgeformt werden.

Eine andere Variante zeichnet sich dadurch aus, daß zwei oder mehr Beutel mit Schaumpartikeln eine Form ganz oder teilweise einhüllend angeordnet und durch Evakuieren der Beutel unter Bildung mehrteiliger Formkörper aufgeformt werden. Auf diese Weise werden mehrteilige, insbesondere mehrschalige Formkörper erhalten, die sich zu einer mehr oder weniger geschlossenen Hülle zusammensetzen lassen. Hierdurch lassen sich beispielsweise Polsterkörper bilden, die ein Verpackungsgut weitestgehend umschließen und vor äußeren Kräften schützen.

Als Schaumpartikel kommen z. B. solche aus Polyolefinen, wie Polyethylen (PE), Polypropylen (PP) oder dgl., oder solche aus Polystyrol (PS), Copolymeren oder Polymer-Blends hiervon in Frage.

Für das erfindungsgemäße Verfahren können Polymer-Schaumpartikel in Form aufgeschäumter Perlen eingesetzt werden, die in bevorzugter Ausführung aus expandiertem Polyethylen (EPE), expandiertem Polypropylen (EPP), expandierten Polystyrol (EPS) oder Copolymeren hiervon bestehen. Stattdessen können vorgeschäumte Partikel eingesetzt werden, die noch Treibmittel enthalten, das bei der Bestrahlung mit Mikrowellenenergie zersetzt wird, so daß die Partikel auf die Endgröße expandiert werden. Hierbei ist ein Treibmittel zu verwenden, dessen Zersetzungs- oder Verdampfungstemperatur oberhalb der Schmelztemperatur des verwendeten Polymers liegt, so daß bei Aufheizen bis auf diese Temperatur sichergestellt ist, daß sich nicht nur das Treibmittel zersetzt, sondern das Polymer auch einen ausreichenden Wärmeinhalt besitzt, um selbst aufzuschmelzen.

Um die für ein zumindest oberflächiges Verschmelzen der Schaumpartikel erforderliche Temperatur durch Bestrahlung mit Mikrowellenenergie sicherzustellen, können entweder Schaumpartikel aus einem mikrowellenabsorbierenden Polymer eingesetzt werden, oder es werden Schaumpartikel aus einem im wesentlichen mikrowellendurchlässigen Polymer eingesetzt, die mit einem mikrowellenabsorbierenden Medium versetzt werden. Als mikrowellenabsorbierende Medien kommen vorzugsweise Flüssigkeiten und insbesondere polare Flüssigkeiten, wie Wasser, Alkohole oder dgl. oder auch elektrisch leitende Flüssigkeiten, wie Salzlösungen in Frage, mit welchen die Schaumpartikel entweder vor dem Abfüllen in dem folienartigen Beutel benetzt werden, oder welche nach dem Abfüllen der Polymer-Schaumpartikel dem Beutel zugesetzt werden. Durch Verdampfen der mikrowellenabsorbierenden Flüssigkeiten wird eine homogene Verteilung des Mediums und somit eine gleichmäßige Wärmeübertragung an die Polymer-Schaumpartikel erreicht, wobei die Siedetemperatur und damit die für das zumindest oberflächige Verschmelzen der Schaumpartikel erforderliche Temperatur durch den beim Evakuieren des Beutels erzeugten Unterdruck einstellbar ist. Die entstehenden Dämpfe werden nach Abgabe ihrer Wärme durch das angelegte Vakuum abgesaugt.

Alternativ können als mikrowellenabsorbierende Medien auch Feststoffe, wie Metallpulver (z. B. Aluminium, Eisen, Zink etc.), Metalloxide oder Ruß verwendet werden, welche den Schaumpartikeln untergemischt oder über ein benetzendes Medium aufgebracht werden. Beim Einsatz noch expandierbarer Schaumpartikel kann alternativ oder zusätzlich die Verwendung eines mikrowellenabsorbierenden Treibmittel vorgesehen sein.

In bevorzugter Ausführung ist vorgesehen, daß der Unterdruck im Beutel nach dem Evakuieren und Formen während der Mikrowellenbestrahlung dadurch aufrechterhalten wird, indem der Beutel z. B. gasdicht verschlossen oder eine Pumpe, wie eine Vakuumpumpe, während der Mikrowellenbestrahlung mit dem Beutel in Verbindung gehalten wird. Der Beutel kann auch mit einer steuerbaren Vakuumpumpe evakuiert werden, so daß der Unterdruck im Beutel während der Mikrowellenbestrahlung geregelt wird, um - bei der Verwendung flüssiger mikrowellenabsorbierender Medien - über den Unterdruck die gewünschte Siedetemperatur zu regeln.

Der insbesondere aus Kunststoff bestehende Beutel kann, falls gewünscht, vom fertigen Formkörper entfernt werden oder auch - beispielsweise in Form einer Dekorfolie - die miteinander verschmolzenen Schaumpartikel umgebend am fertigen Formkörper verbleiben. Während im ersten Fall für den Beutel zweckmäßig ein Polymer mit einer höheren Schmelztemperatur als die Schmelztemperatur der Schaumpartikel gewählt wird, wird im letztgenannten Fall vorzugsweise ein Polymer mit einer ähnlichen oder gar geringfügig niedrigeren Schmelztemperatur als die der Schaumpartikel gewählt, so daß ein inniger Verbund sowohl zwischen den Schaumpartikeln untereinander als auch zwischen diesen und dem Beutel in Form einer Dekorfolie oder dgl. erhalten wird.

Das erfindungsgemäße Verfahren ist insbesondere zur einfachen, schnellen und preiswerten Herstellung von Modellen, Kleinserien, Prototypen und dgl. geeignet. Ferner eignet sich das Verfahren zur individuellen Herstellung von stoßabsorbierenden Formkörpern, wie Polsterkörper für Verpackungen, beispielsweise Einzelverpackungen für in geringer Stückzahl produzierte Geräte, Füllkörpern für Hohlräume oder für Formkerne, für medizinische Kissen oder für Dämpfungseinlagen für Sturzhelme.

Nachstehend ist die Erfindung anhand von Ausführungsbeispielen unter Bezugnahme auf die Zeichnungen näher erläutert. Es zeigen:
- Fig. 1: einen schematischen Verfahrensablauf in einer ersten Ausführungsvariante zur Herstellung eines stoßabsorbierenden Polsterkörpers und
- Fig. 2: einen schematischen Verfahrensablauf in einer weiteren Ausführungsvariante zur Herstellung eines Verpackungskörpers.
- Fig. 3: einen schematischen Verfahrensablauf in einer weiteren Ausführungsvariante zur Herstellung einer Einzelverpackung für stoßempfindliche Waren.

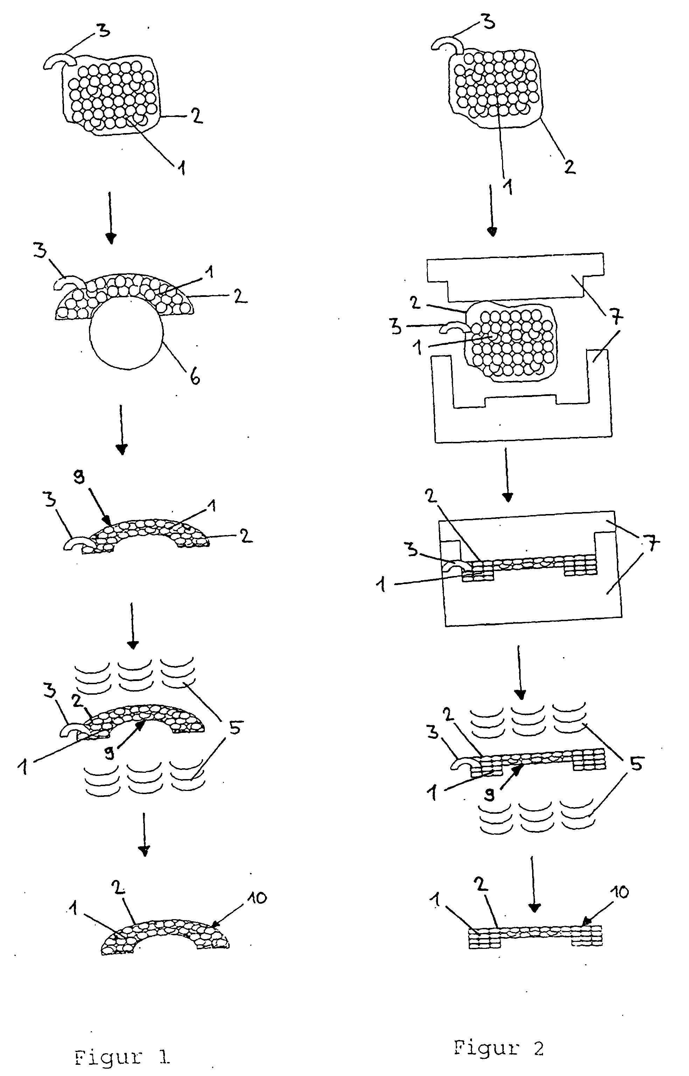

In Fig. 1 ist eine Ausführungsvariante des erfindungsgemäßen Verfahrens zur Herstellung eines stoßabsorbierenden Polsterkörpers 10, z.B. für Sturzhelme, dargestellt. Zu diesem Zweck werden Polymer-Schaumpartikel 1 mit einem mikrowellenabsorbierenden Medium versetzt und in einen Beutel 2 aus einer gasdichten Folie gefüllt. Der Beutel weist beim gezeigten Ausführungsbeispiel einen Anschluß 3 für eine Vakuumpumpe auf.

Durch Auflegen des Beutels 2 auf eine Formkontur 6, die dem menschlichen Schädel nachgebildet ist, und gegebenenfalls manuelles Auf formen werden die Schaumpartikel 1 an die Formkontur 6 angepaßt. Gleichzeitig wird der Beutel 2 über den Anschluß 3 mittels einer (nicht dargestellten) Vakuumpumpe evakuiert, so daß die Schaumpartikel 1 unter dem insbesondere auf der Oberseite des evakuierten Beutels 2 wirkenden äußeren Überdruck komprimiert werden. Zugleich wird die Luft aus den offenporigen Hohlräumen des Schaums abgesaugt. Dadurch nehmen die Schaumpartikel 1 völlig irreguläre und unterschiedliche Formen an, so daß eine sehr dichte und damit druckfeste Packung erzeugt wird, in der die Schaumpartikel 1 mit wesentlich größeren Kontaktflächen als im Ausgangszustand ineinandergreifen. Es wird ein der Formkontur 6 entsprechender ausreichend stabiler, vorgeformter Formkörper 9 erhalten. Anschliessend wird dieser Vorformkörper 9 noch auf der Formkontur liegend oder nach Abnahme von derselben mit Mikrowellenenergie 5 bestrahlt, so daß das mikrowellenabsorbierende Medium erhitzt wird und durch Wärmeübertragung die Schaumstoffpartikel 1 zumindest oberflächig aufgeschmolzen werden und nach dem Abkühlen stoffschlüssig verbunden sind. Der so erhaltene endgültige Formkörper 10 kann als stoßabsorbierendes Element in eine Sturzhelmschale eingesetzt werden. Das preiswerte erfindungsgemäße Verfahren ermöglicht auch eine individuelle Einzelfertigung, indem der Beutel 2 mit den Schaumpartikeln 1 direkt auf den Kcpf des Benutzers aufgeformt wird.

Bei der in Fig. 2 dargestellten Variante des erfindungsgemäßen Verfahrens wurden Polsterkörper, z.B. für Verpackungen für in geringer Stückzahl produzierter Geräte hergestellt. Diese Variante unterscheidet sich von Fig. 1 dadurch, daß die lose in einem Beutel 2 abgefüllten Schaumpartikel 1 nach Anlegen des Vakuums mittels einer zweiteiligen Form 7 unter gleichzeitiger Verengung des Formraumes geformt werden, wobei die Form 7 ausschließlich die Aufgabe der Bestimmung der Formkontur hat und folglich aus einem beliebigen preiswerten und einfach zu bearbeitenden Material bestehen kann. Der Beutel 2 kann auch als Dekorfolie ausgebildet sein, welche den fertigen Formkörper 10 aus Schaumstoff umgibt. Der aus der Form 7 entnommene Vorformkörper 9 wird wiederum in ein MW-Feld 5 eingebracht, um durch Verschmelzen der Schaumpartikel 1 den endgültigen Formkörper 10 zu erzeugen.

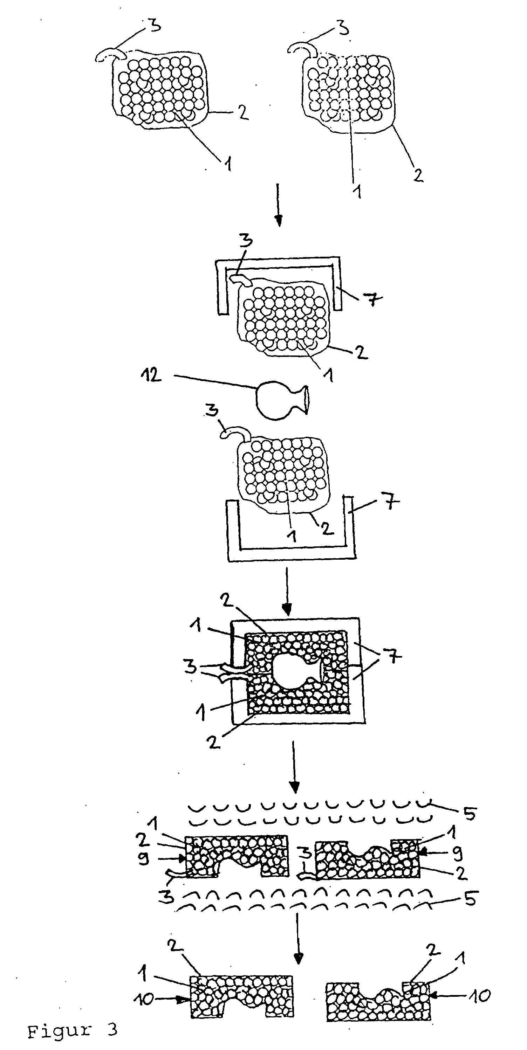

Bei der Ausführungsvariante gemäß Fig. 3 werden Polsterkörper für die Verpackung stoßempfindlicher Artikel 12 dadurch hergestellt, daß zwei mit Schaumpartikeln 1 befüllte Beutel 2 verwendet werden, deren Formgebung einerseits durch Auflegen auf die stoßempfindliche Ware 12, andererseits durch Einlegen in einen Verpackungsbehälter oder in eine diesem entsprechenden zweiteilige Form 7 erfolgt.

Die Schaumpartikel 1 und der Beutel 2 können aus verschiedenen oder gleichen Polymeren bestehen, wobei letzterer Variante wegen der Sortenreinheit und der dadurch gegebenen Möglichkeit eines einfachen Recyclings der Vorzugs zu geben ist. Ebenso können auch die Formen 7 aus dem gleichen Polymer bestehen.

## Patentansprüche

1. Verfahren zur Herstellung von dauerhaften Formkörpern (10) aus Polymer-Schaumpartikeln (1), indem die Schaumpartikel (1) in Form gebracht und durch Mikrowellenenergie miteinander verschweißt werden, **gekennzeichnet durch** folgende Schritte:
- Unterbringen der Schaumpartikel (1) in einem gasdichten, folienartigen Beutel (2);
- Formen des Beutels (2) mit den Schaumpartikeln (1) **durch** Auflegen auf bzw. Einlegen in eine Formkontur (6) und Evakuieren des Beutels (2) auf die Formkontur (6) zu einer dichten Partikelpackung unter Bildung des Formkörpers;
- Bestrahlen der dicht gepackten Schaumpartikel (1) mit Mikrowellenenergie (5) unter Aufrechterhalten des Unterdrucks in dem Beutel (2), so daß die Schaumpartikel zumindest oberflächig miteinander verschmelzen.

2. Verfahren nach Anspruch 1, **dadurch gekennzeichnet, daß** zwei oder mehr Beutel (2) mit Schaumpartikeln (1) eine Form ganz oder teilweise umhüllend angeordnet und durch Evakuieren der Beutel (2) unter Bildung mehrteiliger Formkörper aufgeformt werden.

3. Verfahren nach einem der Ansprüche 1 oder 2, **dadurch gekennzeichnet, daß** der folienartige Beutel (2) mit den Schaumpartikeln (1) durch Einlegen in eine zweioder mehrteilige Form (7) und Evakuieren des Beutels (2) unter gleichzeitiger Verengung des Formraums der mehrteiligen Form (7) geformt wird.

4. Verfahren nach Anspruch 1, **dadurch gekennzeichnet, daß** der folienartige Beutel (2) mit den Schaumpartikeln (1) manuell geformt wird.

5. Verfahren nach einem der Ansprüche 1 bis 4, **dadurch gekennzeichnet, daß** Schaumpartikel (1) aus Polyolefinen, wie Polyethylen (PE), Polypropylen (PP) oder Copolymeren hiervon, verwendet werden.

6. Verfahren nach einem der Ansprüche 1 bis 4, **dadurch gekennzeichnet, daß** Schaumpartikel (1) aus Polystyrol (PS) oder Copolymeren hiervon verwendet werden.

7. Verfahren nach Anspruch 5 oder 6, **dadurch gekennzeichnet, daß** expandierte Polymere, wie EPE, EPP, EPS oder Copolymere hiervon, verwendet werden.

8. Verfahren nach einem der Ansprüche 1 bis 7, **dadurch gekennzeichnet, daß** Schaumpartikel (1) aus einem mikrowellenabsorbierenden Polymer verwendet werden.

9. Verfahren nach einem der Ansprüche 1 bis 7, **dadurch gekennzeichnet, daß** Schaumpartikel (1) aus einem im wesentlichen mikrowellendurchlässigen Polymer verwendet und mit einem mikrowellenabsorbierenden Medium versetzt werden.

10. Verfahren nach Anspruch 9, **dadurch gekennzeichnet, daß** als mikrowellenabsorbierendes Medium Flüssigkeiten, wie Wasser oder Alkohole, verwendet werden.

11. Verfahren nach Anspruch 9, **dadurch gekennzeichnet, daß** als mikrowellenabsorbierendes Medium Feststoffe, wie Metallpulver, Ruß od. dgl., verwendet werden.

12. Verfahren nach Anspruch 9, **dadurch gekennzeichnet, daß** als mikrowellenabsorbierendes Medium das für die Herstellung der Schaumpartikel (1) dem Polymer zugesetzte Treibmittel verwendet wird.

13. Verfahren nach einem der Ansprüche 1 bis 12, **dadurch gekennzeichnet, daß** der Unterdruck im Beutel (2) während der Mikrowellenbestrahlung gesteuert wird.

14. Verfahren nach Anspruch 13, **dadurch gekennzeichnet, daß** der Unterdruck mittels einer Vakuumpumpe gesteuert wird.

15. Verfahren nach einem der Ansprüche 1 bis 14, **dadurch gekennzeichnet, daß** ein Beutel (2) aus Kunststoff verwendet wird.

16. Verfahren nach Anspruch 15, **dadurch gekennzeichnet, daß** für den Beutel (2) ein MW-durchlässiges Polymer verwendet wird.

17. Verfahren nach Anspruch 15 oder 16, **dadurch gekennzeichnet, daß** für den Beutel (2) ein Polymer mit einer höheren Schmelztemperatur als die der Schaumpartikel (1) verwendet wird.

18. Verfahren nach Anspruch 15 oder 16, **dadurch gekennzeichnet, daß** für den Beutel (20) und die Schaumpartikel (6) das gleiche Polymer verwendet wird.

19. Verfahren nach einem der Ansprüche 15 bis 18, **dadurch gekennzeichnet, daß** der Beutel (2) vom fertigen Formteil (10) aus den Schaumpartikeln (1) entfernt wird.

20. Verfahren nach Anspruch 15 oder 16, **dadurch gekennzeichnet, daß** für den Beutel (2) ein Polymer mit einer Schmelztemperatur im Bereich derjenigen der Schaumpartikel (1) verwendet wird.

21. Verfahren nach Anspruch 20, **dadurch gekennzeichnet, daß** der Beutel (2) mit den Schaumpartikeln (1) verschmolzen wird.

22. Verfahren nach Anspruch 20 oder 21, **dadurch gekennzeichnet, daß** eine Dekorfolie als Beutel (2) verwendet wird.

23. Verfahren nach einem Ansprüche 1 bis 22 zur Herstellung von Modellen, Kleinserien, Prototypen, Polsterkörpern für Verpackungen, Füllkörpern für Hohlräume oder Formkernen.

## Claims

1. Method for producing durable moulded parts (10) from polymer foam particles (1) by putting the foam particles (I) into the mould and by bonding them together by means of microwave energy, **characterised by** the following steps:
. placing the foam particles (1) in a sealed film-like bag (2);
. moulding of the bag (2) with the foam particles (1) by placing on or placing into a mould contour (6) and evacuating the bag (2) to the mould contour (6) in order to form a dense particle packing while forming the moulded part;
. irradiating the densely packed foam particles (1) with microwave energy (5) while maintaining the low pressure in the bag (2) so that the foam particles melt together at least superficially.

2. Method according to claim 1, **characterised in that** two or more bags (2) with foam particles (1) are disposed so as to cover a mould entirely or partly and are mouldedon by evacuating the bags (2) while forming multi-part moulded parts.

3. Method according to one of the claims 1 or 2, **characterised in that** the film-like bag (2) with the foam particles (1) is formed by placing in a two- or multi-part mould (7) and evacuating the bag (2) with simultaneous constriction of the mould space of the multi-part mould (7).

4. Method according to claim 11 **characterised in that** the film-like bag (2) with the foam particles (1) is formed manually.

5. Method according to one of the claims 1 to 4, **characterised in that** foam particles (1) are used which are made of polyolefines, such as polyethylene (PE), polypropylene (PP) or copolymers thereof.

6. Method according to one of the claims 1 to 4, **characterised in that** foam particles (1) are used which are made of polystyrene (PS) or copolymers thereof.

7. Method according to claim 5 or 6, **characterised in that** expanded polymers such as EPE, EPP, EPS or copolymers thereof are used.

8. Method according to one of the claims 1 to 7, **characterised in that** foam particles (1) are used which are made of a microwave-absorbing polymer.

9. Method according to one of the claims 1 to 7, **characterised in that** foam particles (1) are used which are made of an essentially microwave-permeable polymer and are mixed with a microwave-absorbing medium.

10. Method according to claim 9, **characterised in that** liquids such as water or alcohols are used as the microwave-absorbing medium.

11. Method according to claim 9, **characterised in that** solid materials such as metal powder, carbon black or the like are used as the microwave-absorbing medium.

12. Method according to claim 9, **characterised in that** the foaming agent added to the polymer for the production of the foam particles (1) is used as the microwave-absorbing medium.

13. Method according to one of the claims 1 to 12, **characterised in that** the low pressure in the bag (2) is controlled during microwave irradiation.

14. Method according to claim 13, **characterised in that** the low pressure is controlled by means of a vacuum pump.

15. Method according to one of the claims I to 14, **characterised in that** a bag (2) made of plastic material is used.

16. Method according to claim 15, **characterised in that** a MW-permeable polymer is used for the bag (2).

17. Method according to claim 15 or 16, **characterised in that** a polymer with a higher melting temperature than that of the foam particles (1) is used for the bag (2).

18. Method according to claim 15 or 16, **characterised in that** the same polymer is used for the bag (20) and the foam particles (6).

19. Method according to one of the claims 15 to 18, **characterised in that** the bag (2) is removed from the finished moulded part (10) made of the foam particles (1).

20. Method according to claim 15 or 16, **characterised in that** a polymer with a melting temperature in the range of that of the foam particles (1) is used for the bag (2).

21. Method according to claim 20, **characterised in that** the bag (2) is melted with the foam particles (1).

22. Method according to claim 20 or 21, **characterised in that** a decorative film is used as the bag (2).

23. Method according to one of the claims 1 to 22, for producing models, short runs, prototypes, padding materials for packaging, filler materials for hollow spaces or mould cores.

## Revendications

1. Procédé pour produire des produits moulés durables (10) à partir de particules de mousse en polymère, dans lequel les particules de mousse (1) sont mises en forme et sont soudées les unes aux autres par l'énergie des micro-ondes,
**caractérisé par** les étapes suivantes :
- on introduit les particules de mousse (1) dans un sac du type feuillet (2) étanche aux gaz,
- on moule le sac (2) avec les particules de mousse par mise en place sur ou insertion dans un profil de moule (6) et mise sous vide du sac (2) sur le profil de moule (6), en un emballage de particules étanches avec formation de la forme moulée,
- irradiation des particules de mousse emballées d'une manière étanche avec l'énergie des micro-ondes (5) tout en maintenant la dépression dans le sac (2), de façon que les particules de mousse fondent ensemble les unes avec les autres au moins superficiellement.

2. Procédé selon la revendication 1,
**caractérisé en ce que**
deux ou davantage de sacs (2) sont disposés avec des particules de mousse (1), totalement ou partiellement d'une manière enveloppante sur un moule et par mise sous vide du sac sont comprimés avec formation de formes moulées à plusieurs compartiments.

3. Procédé selon l'une des revendications 1 ou 2,
**caractérisé en ce que**
le sac du type feuillet (2) est moulé avec les particules de mousse (1) par introduction dans un moule (7) à deux ou plusieurs compartiments et mise sous vide du sac (2) avec contraction en même temps de l'espace de moulage du moule à plusieurs compartiments (7).

4. Procédé selon la revendication 1,
**caractérisé en ce que**
le sac du type feuillet (2) est moulé manuellement avec les particules de mousse (1).

5. Procédé selon l'une des revendications 1 à 4,
**caractérisé en ce qu'**
on utilise des particules de mousse à base de polyoléfines comme le polyéthylène (PE), le polypropylène (PP) ou des copolymères de ceux-ci.

6. Procédé selon l'une des revendications 1 à 4,
**caractérisé en ce qu'**
on utilise des particules de mousse à base de polystyrène (PS) ou de copolymères de celui-ci.

7. Procédé selon la revendication 5 ou la revendication 6,
**caractérisé en ce qu'**
on utilise des polymères expansés comme EPE, EPP, EPS ou des copolymères de ceux-ci.

8. Procédé selon l'une des revendications 1 à 7,
**caractérisé en ce qu'**
on utilise des particules de mousse à base d'un polymère qui absorbe les micro-ondes.

9. Procédé selon l'une des revendications 1 à 7,
**caractérisé en ce qu'**
on utilise des particules de mousse (1) à base d'un polymère essentiellement transparent aux micro-ondes et on les additionne d'un milieu qui absorbe les micro-ondes.

10. Procédé selon la revendication 9,
**caractérisé en ce qu'**
on utilise comme milieu qui absorbe les micro-ondes, des liquides comme l'eau ou les alcools.

11. Procédé selon la revendication 9,
**caractérisé en ce qu'**
on utilise comme milieu qui absorbe les micro-ondes des substances solides comme des poudres métalliques, du charbon ou similaires.

12. Procédé selon la revendication 9,
**caractérisé en ce qu'**
on utilise comme milieu qui absorbe les micro-ondes l'agent moussant ajouté au polymère pour la production des particules de mousse (1).

13. Procédé selon l'une des revendications 1 à 12,
**caractérisé en ce qu'**
on régule la dépression dans le sac (2) pendant l'irradiation par les micro-ondes.

14. Procédé selon la revendication 13,
**caractérisé en ce qu'**
on régule la dépression à l'aide d'une pompe à vide.

15. Procédé selon l'une des revendications 1 à 14,
**caractérisé en ce qu'**
on utilise un sac (2) en matière plastique.

16. Procédé selon la revendication 15,
**caractérisé en ce qu'**
on utilise pour le sac (2) un polymère transparent aux micro-ondes.

17. Procédé selon la revendication 15 ou la revendication 16,
**caractérisé en ce qu'**
on utilise pour le sac (2) un polymère ayant une température de fusion supérieure à celle des particules de mousse (1).

18. Procédé selon la revendication 15 ou la revendication 16,
**caractérisé en ce qu'**
on utilise le même polymère pour le sac (2) et pour les particules de mousse (1).

19. Procédé selon l'une des revendications 15 à 18,
**caractérisé en ce qu'**
on enlève le sac (2) de la pièce moulée terminée (10) faite des particules de mousse.

20. Procédé selon la revendication 15 ou la revendication 16,
**caractérisé en ce qu'**
on utilise pour le sac (2) un polymère ayant une température de fusion dans la plage de celle des particules de mousse (1).

21. Procédé selon la revendication 20,
**caractérisé en ce qu'**
on fond le sac (2) avec les particules de mousse (1).

22. Procédé selon la revendication 20 ou la revendication 21,
**caractérisé en ce qu'**
on utilise comme sac (2) une feuille pour l'imprégnation par des matières synthétiques.

23. Procédé selon l'une des revendications 1 à 22, en vue de la production de modèles, de petites séries, de prototypes, de solides de rembourrage pour emballages, de corps de remplissage pour alvéoles ou de noyaux de moule.
